# EUROPÄISCHE PATENTSCHRIFT

(11) **EP 2 933 136 B1**
(45) Veröffentlichungstag und Bekanntmachung des Hinweises auf die Patenterteilung: **30.10.2019**
(21) Anmeldenummer: 15163941.6
(22) Anmeldetag: 16.04.2015
(51) Int. Cl.: B60N 2/70

(54) **POLSTERELEMENT UND VERFAHREN ZUR HERSTELLUNG EINES POLSTERELEMENTS**
UPHOLSTERY ELEMENT AND METHOD FOR PRODUCING THE SAME
ÉLÉMENT DE REMBOURRAGE ET PROCÉDÉ DE FABRICATION D'UN ÉLÉMENT DE REMBOURRAGE

(30) Priorität: 16.04.2014 DE 102014207359; 09.07.2014 DE 102014213373
(43) Veröffentlichungstag der Anmeldung: 21.10.2015
(73) Patentinhaber: Adient Seating Ltd. & Co. KG, 32339 Espelkamp (DE)
(72) Erfinder: Janz, Michael, 32609 Huellhorst (DE); Progscha, Rainer, 32369 Rahden (DE); Fuchs, Hilmar, 31787 Hameln (DE)
(74) Vertreter: Finger, Catrin

(56) Entgegenhaltungen:
- DE-A1-102010 005 994
- DE-A1-102012 010 479
- DE-T2- 69 319 577
- DE-T2- 69 517 873

## Beschreibung

Die Erfindung betrifft ein Polsterelement, insbesondere ein Sitzpolsterelement zur Verwendung für einen Fahrzeugsitz in einem Fahrzeug, und ein Verfahren zur Herstellung eines Polsterelements sowie einen Fahrzeugsitz mit einem solchen Polsterelement.

Das Polsterelement umfasst hierbei insbesondere ein Polsterelement eines Sitzes, oder einer Lehnenauflage oder eine Polsterauflage für einen Sitz, wobei das Polsterelement die Trägerstruktur des Sitzes aus Metall oder Kunststoff zur Erhöhung des Sitzkomforts überdeckt.

Üblicherweise bestehen Polsterelemente für Sitze, insbesondere Sitzteile und Sitzlehnen, im Möbel- und Automobilbereich aus Polyurethanweichschaum (PUR-Weichschaum).

Darüber hinaus sind verschiedene Verfahren zur Herstellung solcher Polsterelemente aus Faserverbundwerkstoffen - beispielsweise aus Kokosfasern und Latex als Bindemittel - für einen Kraftfahrzeugsitz bekannt.

Aus der DE 10 2010 005 994 A1 sind ein Hybrid-Polsterelement, insbesondere ein Sitzpolsterelement zur Verwendung in einem Kraftfahrzeug, sowie ein Verfahren zur Herstellung eines Polsterelementes und ein Fahrzeugsitz bekannt. Das Polsterelement weist eine Vlieslage und einen Faserverbundwerkstoff auf, wobei zwischen der Vlieslage und dem Faserverbundwerkstoff ein Einlegeteil angeordnet ist. Der Faserverbundwerkstoff weist ein Bindemittel auf, wobei das Bindemittel bei einer Temperatur kleiner als 120° aushärtbar ist.

Weiterhin ist aus der DE 695 17 873 T2 eine Polsterstruktur, welche ein dreidimensionales, mehrfach gewebtes Gewebe bzw. Textur bzw. Gewirke ist, bekannt. Die Polsterstruktur ist von einem räumlichen Flächen- bzw. Oberflächenschichtabschnitt und einem räumlichen Zwischenschichtabschnitt gebildet, wobei der Oberflächenschichtabschnitt eine Struktur aufweist, welche einstückig bzw. gemeinsam bzw. integral an einer Seite oder beiden Seiten des räumlichen Zwischenschichtabschnittes ausgebildet ist. Dabei sind Ausstülpungen bzw. Vorsprünge an der einen Seite oder beiden Seiten des Oberflächenschichtabschnittes zumindest in eine Richtung ausgebildet. Die Ausstülpungen bzw. Vorsprünge weisen eine mittlere Höhe von 2 mm bis 15 mm auf, wobei eine mittlere Breite an einer Seite des Vorsprunges 2 mm bis 3 mm beträgt. Der Zwischenschichtabschnitt ist von einer oder mehreren Schichten gebildet, wobei jede Schicht eine Vielzahl von miteinander in Verbindung stehenden, hohlen Abschnitten bzw. Bereichen aufweist, welche parallel in einer Richtung angeordnet sind. Ein Querschnitt weist normal auf die Längsrichtung der miteinander in Verbindung stehenden, hohlen Abschnitte in dem Zwischenschichtabschnitt die Form eines Trapezes bzw. Trapezoids auf. Ein Oberflächenschichtabschnitt ist einstückig bzw. integral in die Oberfläche des Zwischenschichtabschnittes gewebt.

Darüber hinaus beschreibt die DE 10 2012 010 479 A1 ein Strukturmerkmal für Polster, das aus einem dreidimensional stochastisch orientierten Wirrfasermaterial besteht. Das dreidimensional orientierte Wirrfasermaterial ist ein Biopolymerfasermaterial, ein rezykliertes Fasermaterial oder ein Naturfasermaterial. Zudem offenbart die Offenlegungsschrift ein Polster, das mit dem Strukturmaterial gepolstert ist.

Aufgabe der vorliegenden Erfindung ist es, ein verbessertes Polsterelement mit einem verbesserten Sitzkomfort und höherer Wärmefestigkeit sowie einfacher Herstellbarkeit und langer Lebensdauer anzugeben. Des Weiteren ist es Aufgabe der Erfindung, einen verbesserten Sitz sowie ein verbessertes Verfahren zur Herstellung eines solchen Polsterelements anzugeben.

Die Aufgabe wird erfindungsgemäß mit einem Polsterelement gelöst, welches aus einem Faserverbundwerkstoff mit einem dreidimensional stochastisch orientierten, wärmevorbehandelten Fasermaterial, insbesondere einem modifizierten und schweißbaren Thermoplast, gebildet ist, das aus Polyethylenterephthalat (auch kurz PET genannt) gebildet ist, das durch Hinzufügen eines Halogenkohlenwasserstoffs oder eines duroplastischen Bindemittels gebunden ist.

Durch die Verwendung von Polyethylenterephthalat als Fasermaterial ist ein größeres Volumen des Ausgangsstoffes gegenüber herkömmlichen Stoffen, wie Kokosfasern, im Formgebungswerkzeug ermöglicht, so dass der Werkzeuginnendruck bei Formgebung des Polsterelements steigt. Ein solches Polsterelement aus Polyethylenterephthalat weist gegenüber herkömmlichen Polsterelementen aus Kokosfasern eine größere Festigkeit und Formbeständigkeit auf.

Zur Bindung des Fasermaterials ist ein duroplastisches Bindemittel, insbesondere ein duroplastischer Kleber, zum Beispiel Chloropren Kautschuk oder ein PU oder PUR Kleber, vorgesehen.

In einer weiteren Ausführungsform ist das aus Polyethylenterephthalat und dem duroplastischen Bindemittel gebildete Polsterelement zumindest auf einer der Oberflächenseiten mit einer Vliesschicht, insbesondere einem Wollvlies. Zusätzlich können ein oder mehrere Einlegerschichten zwischen der Vliesschicht und dem Polsterelement angeordnet sein.

Eine Weiterbildung der Erfindung sieht vor, dass das Thermoplast, nämlich das Fasermaterial aus Polyethylenterephthalat mehrfach wärmevorbehandelt und gestreckt und verreckt ist, bevor es mit dem Duroplast gemischt, erwärmt und gebunden wird. Durch die mehrfache, insbesondere zweifache Wärmevorbehandlung und Streckung und Verreckung des Fasermaterials wird die homogene Oberfläche der gebildeten Fasern im Wesentlichen beibehalten. Darüber hinaus kommt es insbesondere durch Streckung und Verreckung der Fasern zu einer elektrostatischen Aufladung und infolgedessen zur Kohäsion und zu einer hohen Oberflächenspannung, wodurch das hinzugefügte duroplastische Bindemittel besser anhaftet und eine verbesserte Bindung von Thermoplast und Duroplast bewirkt.

Erfindungsgemäß kann der Faserverbundwerkstoff aus einem dreidimensionalen stochastisch orientierten, Fasermaterial alternativ aus einem Polysulfon, insbesondere Polyethersulfon (kurz PES oder PESU genannt), oder aus einem synthetischen Polymer, insbesondere aus Polylactid (kurz PLA genannt), gebildet sein, das mittels eines Halogenkohlenwasserstoffs, insbesondere Chloropren-Kautschuk, und/oder mittels Polyurethane basierten duroplastischen Bindemitteln gebunden ist.

Die Vorteile der Erfindung liegen in einer guten thermischen Stabilität bei einer gegenüber herkömmlichen Polsterelementen leichteren Ausführung des erfindungsgemäßen Polsterelements. Insbesondere ist ein solches Polsterelement mehr als 35 % leichter gegenüber herkömmlicher Polsterelemente mit Kokosfasern.

Darüber hinaus weist das aus einem Thermoplast gebildete Polsterelement im Endzustand aufgrund der Eigenschaften der Ausgangsstoffe, wie homogene Faseroberfläche mit höherer Oberflächenspannung aufgrund der mehrfachen Wärmevorbehandlung in Verbindung mit dem duroplastischen Bindemittel, eine höhere Wärmeformbeständigkeit gegenüber herkömmlichen Thermoplast auf. Insbesondere weist der Faserverbundwerkstoff und somit das Polsterelement einen Erweichungspunkt von größer 100°C auf. Bei dem Erweichungspunkt handelt es sich um den Glasübergangspunkt für die amorphen Bereiche des Fasermaterials. Der übliche Glasübergangspunkt oder Erweichungspunkt des Polyethylenterephthalats liegt bei 74°C. Somit weist das Polsterelement mit einem Erweichungspunkt von größer 100°C eine verbesserte Wärmeformbeständigkeit auf.

In einer Ausführungsform ist das Fasermaterial mit einem Hilfs-, Umhüll- und/oder Füllstoff versehen. Mittels des Hinzufügens eines Hilfs-, Umhüll- und/oder Füllstoffs ist es realisierbar, dass das Polsterelement als Endprodukt zumindest veränderte und gewünschte Eigenschaften, wie z. B. eine erhöhte Wärmeformbeständigkeit, aufweist.

Eine weitere Ausführungsform sieht vor, dass als Zusatz ein Flammschutzmittel, beispielsweise Exolit oder Aktivekohle, zugefügt wird. Dabei wird das Flammschutzmittel insbesondere einer Kunststoffschmelze der Fasern zugefügt. Alternativ oder zusätzlich weist das duroplastische Bindemittel ein Flammschutzmittel auf. Dabei ist es hinreichend, wenn in einem der beiden Ausgangsmaterialien ein Flammschutzmittel, wie Exolit oder Aktivkohle, enthalten ist.

Eine Weiterbildung des Polsterelementes sieht vor, dass eine Faserlänge, ein Faserdurchmesser, eine Faserquerschnittsform, eine Faserform, insbesondere eine Verdrillung und/oder Windung der Fasern, und/oder eine Fasermenge, d. h. eine Faseranzahl, des Polsterelements vorgegeben sind bzw. ist. Durch die Vorgabe der Faserlänge, des Faserdurchmessers, der Faserquerschnittsform und/oder der Fasermenge ist es möglich, einen Komfort und eine Festigkeit des Polsterelements vorzugeben. Bildet das Polsterelement eine Sitzfläche oder eine Lehnenauflage eines Sitzes, insbesondere eines Fahrzeugsitzes, so kann mittels der Faserlänge, des Faserdurchmessers, der Faserquerschnittsform, der Faserform und/oder der Fasermenge beispielsweise bereichsweise eine Komfort- oder Sitzeigenschaft gezielt eingestellt werden. Insbesondere können über bereichsweise unterschiedliche Fasermengen und Faserdurchmesser verschiedene Bereiche des Polsterelements für verschiedene Funktionen ausgebildet sein. Beispielsweise können Polsterbereiche mit größerer Fasermenge und/oder größeren Faserdurchmessern als Trägerbereiche ausgebildet sein und Polsterbereiche mit geringerer Fasermenge und/oder geringerem Faserdurchmesser als softes Polster ausgebildet sein.

Eine mögliche Ausführungsform sieht vor, dass ein Kunststoffteil und/oder ein Metallteil als Zusatzkomponenten oder Zusatzkomponente zur Befestigung an dem Polsterelement, insbesondere zur Befestigung von Bezugsstoffeinhängungen, zumindest mit dem Thermoplast des Fasermaterials stoffschlüssig verbunden sind bzw. ist. Durch Verwendung des schweißbaren Thermoplast als Bestandteil des Faserverbundwerkstoffs ist es möglich, Zusatzkomponenten, wie beispielsweise Befestigungselemente an dem Sitzpolster oder der Lehnenauflage zu befestigen, ohne dass ein zusätzliches Befestigungsmittel und/oder -element erforderlich sind bzw. ist.

In einer weiteren möglichen Ausführungsform sind in das Fasermaterial zumindest bereichsweise temperierbare und/oder stromführende Elemente, insbesondere Drähte, eingebracht. Dadurch ist es vergleichsweise einfach möglich, eine Heizung, insbesondere eine Sitzheizung, in das Polsterelement zu integrieren.

Zudem betrifft die Erfindung einen Sitz, insbesondere Fahrzeugsitz, mit zumindest einem solchen Polsterelement, bei welchem zumindest ein Sitzkomfort erhöht ist.

In einer Ausbildung ist das Polsterelement in einem einem Benutzer zugewandten Bereich angeordnet, wobei das Polsterelement in einem Oberflächenbereich eines Sitz-, Lehnen und/oder Kopfstützenteils angeordnet ist.

Dabei kann das Polsterelement als Träger oder Polster ausgebildet sein. Zusätzlich kann auf das als Träger oder Polster dienendes Polsterelement ein Vlies, insbesondere ein non-woven Wollvlies mit PET-Faseranteilen, ein 100%-iges PET-Vlies oder ein Wollvlies, aufgebracht sein. Insbesondere kann das Polsterelement zumindest auf einer Oberflächenseite zusätzlich mit dem Vlies versehen sein. Dabei sind in das als Träger ausgebildeten Polsterelement Zusatzkomponenten eingebracht und mit diesem verbunden. Darüber hinaus kann zwischen dem Polsterelement und dem Vlies mindestens ein Einleger, beispielsweise ein Komforteinleger aus Polyurethan-Schaum oder Vlies, angeordnet sein. Auch können mehrere Einleger zwischen Vlies und Polsterelement angeordnet sein.

Weiterhin betrifft die Erfindung ein Verfahren zur Herstellung eines solchen Polsterelements, wobei ein einen schweißbaren Thermoplast umfassendes Fasermaterial zur Bildung eines Faserverbundwerkstoffs mit einem Hilfs-, Umhüll- und/oder Füllstoff durch Hinzufügen eines Bindemittels, insbesondere eines Halogenwasserstoffs, gebunden wird.

Erfindungsgemäß wird zur Bildung des Faserverbundwerkstoffs als Thermoplast ein dreidimensionales stochastisch orientiertes Fasermaterial aus Polyethylenterephthalat mehrfach wärmevorbehandelt und durch Hinzufügen eines duroplastischen Bindemittels gebunden. Dabei wird das Fasermaterial aus einem Granulat aus Polyethylenterephthalat gebildet und derart wärmevorbehandelt, dass das Fasermaterial mehr als einmal erwärmt, zu Fasern gestreckt, verreckt und getrocknet wird. Insbesondere wird das erwärmte, gestreckte und verreckte Fasermaterial heiß getrocknet.

Dabei wird das Fasermaterial stufenweise in Temperaturbereichen von 90°C bis 250°C wärmevorbehandelt und in Temperaturbereichen von 80°C bis 130°C heiß getrocknet. Beispielsweise wird das Fasermaterial in einer ersten Vorbehandlung bei einer Temperatur von größer 200°C, insbesondere von 200°C bis 250°C, beispielsweise von 220°C, erwärmt und anschließend gestreckt und verreckt und bei einer Temperatur von kleiner 150°C, insbesondere bei einer Temperatur von 100°C, heiß getrocknet. In einer zweiten Vorbehandlung wird das Fasermaterial bei einer Temperatur von größer 150°C, insbesondere von 150°C bis 200°C, beispielsweise von 160°C oder 180°C, erwärmt und anschließend gestreckt und verreckt und bei einer Temperatur von kleiner 150°C, insbesondere bei einer Temperatur von 100°C, heiß getrocknet.

Die einmal oder mehrmals wärmevorbehandelten Fasern, insbesondere Endlosfasern, werden anschließend in eine vorgegebene Länge, beispielsweise von 90 cm bis 150 cm, insbesondere von 120 cm, geschnitten, wobei geschnittene Fasern oder Endlosfasern zu einem Faserstrang getwistet werden.

Optional kann der Faserstrang - Kurzfaserstränge aus geschnittenen Fasern oder ein Endlosfaserstrang - wärmevorbehandelt werden. Beispielsweise kann der Faserstrang in einem Temperaturbereich von 100°C bis 130°C, inbesondere bei 120°C, für mehrere Minuten, insbesondere mehr als 20 Minuten, beispielsweise 22 Minuten oder 25 Minuten, wärmebehandelt werden. Hierdurch kommt es zu einer Kräuselung der Fasern des Seils.

Anschließend werden aus dem getwisteten Faserstrang Fasern gelöst und mit dem duroplastischen Bindemittel gemischt und in ein Formgebungswerkzeug gegeben und dort unter Wärme gebunden und zu dem Polsterelement geformt. Dabei werden die gelösten und mit dem duroplastischen Bindemittel gemischten Fasern bei einer Temperatur von größer 100°C, insbesondere in einem Bereich von 110°C bis 120°C, im geschlossenen Formgebungswerkzeug gebunden und geformt. Die Verweildauer im Formgebungswerkzeug beträgt wenige Minuten, insbesondere mehr als zwei Minuten, beispielsweise zwei bis zehn Minuten, insbesondere vier Minuten. Anschließend wird das fertige Polsterelement dem Formgebungswerkzeug entnommen. Gegebenenfalls kann das Polsterelement im Formgebungswerkzeug auf Form geschnitten werden..

Das derart gefertigte Polsterelement und insbesondere dessen Oberfläche ist schweißbar, so dass Zusatzkomponenten in einfacher Art und Weise auf das Polsterelement aufgebracht, insbesondere geschweißt werden können.

Eine oder beide Oberflächen des fertigen Polsterelements kann bzw. können zusätzlich mit einem Vlies, insbesondere einem non-woven Wollvlies mit oder ohne PET-Fasern oder als 100%iges PET-Vlies, versehen sein. Das Vlies ist dabei stoffschlüssig mit dem Polsterelement verbunden.

In einer Weiterbildung des Verfahrens wird eine Oberfläche des Fasermaterials des schweißbaren Thermoplasts durch Hinzufügen eines Zusatzstoffes, durch Anätzen, durch Anwendung des sogenannten Coronaverfahrens und/oder mittels Hinzufügen eines Haftvermittlers aufgeraut. Vorzugsweise kann als Zusatzstoff ein Mittel zur Schwerentflammbarkeit des Polsterelementes hinzugefügt werden.

Durch das Aufrauen kann eine Bindung des Bindemittels an den Oberflächen des Fasermaterials verbessert werden.

Anhand der beigefügten schematischen Figuren werden Ausführungsbeispiele der Erfindung näher erläutert. Dabei zeigen:
- Fig. 1: schematisch verschiedene Ausführungsbeispiele für ein Polsterelement aus einem gebundenen Fasermaterial aus einem schweißbaren Thermoplast in Draufsicht,
- Fig. 2: schematisch ein Ausführungsbeispiel für ein Polsterelement aus einem gebundenen Fasermaterial in Schnittdarstellung,
- Fig. 3: schematisch ein Ausführungsbeispiel für ein Polsterelement aus einem gebundenen Fasermaterial mit integrierter, insbesondere stoffschlüssig angebundener Zusatzkomponente,
- Fig. 4: schematisch ein Ausführungsbeispiel für ein Polsterelement aus einem gebundenen Fasermaterial mit einem Komforteinleger,
- Fig. 5A bis 5C: schematisch einen Ablauf für ein Verfahren zur Herstellung eines Polsterelements, schematisch eine verdrillte Faser und schematisch einen vergrößerten Ausschnitt von mittels duroplastischem Bindemittel gebundenen Fasern,
- Fig. 6: schematisch einen vergrößerten Ausschnitt einer Oberfläche eines Polsterelements,
- Fig. 7: schematisch einen vergrößerten Ausschnitt eines Querschnitts durch einen Sitz aus einem Polsterelement, einem Einleger und einem Vlies- oder Wollelement, und
- Fig. 8: schematisch einen vergrößerten Ausschnitt einer Draufsicht eines Polsterelements als Träger mit Zusatzkomponenten.

Einander entsprechende Teile sind in allen Figuren mit gleichen Bezugszeichen versehen.

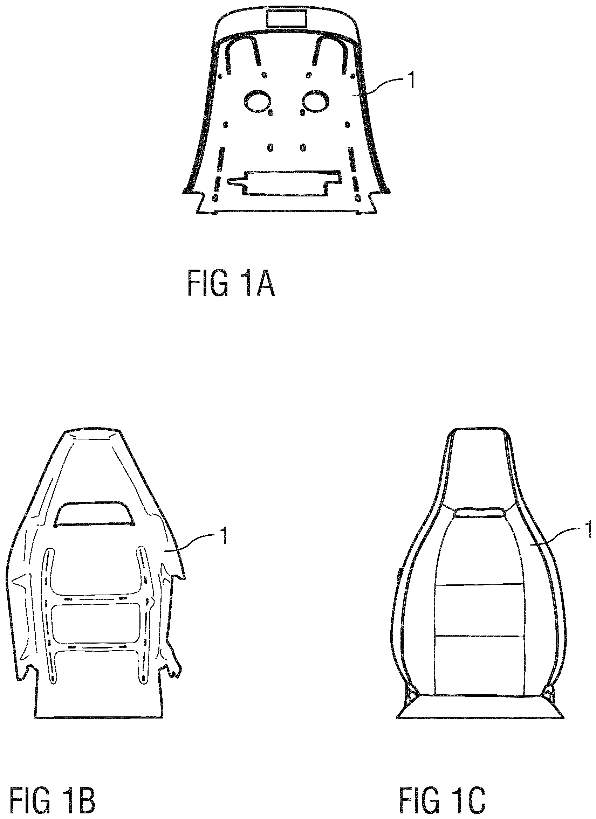

Die Figur 1 zeigt in einer Draufsicht Ausführungsbeispiele für verschiedene Polsterelemente 1 aus einem gebundenen Fasermaterial, wobei Figur 1A ein als Sitzlehnenträgerteil ausgebildetes Polsterelement 1 zeigt und Figur 1B ein als Sitzlehnenpolsterteil ausgebildetes Polsterelement 1 zeigt. In Figur 1C ist das als Sitzlehnenpolsterteil nach Figur 1B ausgebildete Polsterelement 1 im Endzustand mit Bezugsstoff gezeigt.

Das Polsterelement 1 bildet insbesondere einen Teil eines Sitzes, insbesondere eines Fahrzeugsitzes. Das Teil des Sitzes ist insbesondere eine Kopfstütze, ein Sitzteil und/oder ein Lehnenteil. Der Sitz, insbesondere der Fahrzeugsitz, weist üblicherweise eine Trägerstruktur des Sitz- oder Lehnenteils aus Metall oder Kunststoff auf, die von einer Polsterung, wie dem Polsterelement 1, überdeckt ist, so dass der Sitzkomfort erhöht ist. Durch das als ein Thermoplast ausgebildete Polsterelement 1 wird der Sitzkomfort nochmals verbessert. Dabei ist das Polsterelement 1 insbesondere im Bereich des zu formenden Teils des Sitzes, der dem Benutzer des Sitzes zugewandt ist, und somit im Oberflächenbereich des Sitz-, Lehnen- und/oder Kopfstützenteils ausgebildet.

Das Polsterelement 1 ist alternativ zu einem bekannten Vlies oder Polster, insbesondere einem Wollwatte-Vlies oder Naturfaser-Polster, aus einem Faserverbundwerkstoff gebildet, der zumindest einen modifizierten und schweißbaren Thermoplast umfasst, der aus einem dreidimensionalen stochastisch orientierten Fasermaterial aus Polyethylenterephthalat gebildet ist.

Das Fasermaterial ist mittels eines duroplastischen Bindemittels, insbesondere Chloropren Kautschuk, eines auf PU oder PUR basierenden Binders, gebunden.

Gemäß einer Weiterbildung wird das synthetische Fasermaterial derart verarbeitet, dass es veränderte Eigenschaften im Endprodukt aufweisen kann, wie eine höhere Wärmeformbeständigkeit. Insbesondere weist das Polsterelement 1 einen Erweichungspunkt von größer 100°C auf.

Hierzu wird das Fasermaterial aus Polyethylenterephthalat mehrfach wärmevorbehandelt und durch Hinzufügen des duroplastischen Bindemittels gebunden und wärmenachbehandelt. Dabei wird das Fasermaterial aus einem Granulat aus Polyethylenterephthalat gebildet und derart wärmevorbehandelt, dass das Fasermaterial mehr als einmal erwärmt, zu Fasern gestreckt, verreckt und getrocknet wird. Insbesondere wird das erwärmte, gestreckte und verreckte Fasermaterial heiß getrocknet.

Durch die Verwendung von stochastisch orientierten, modifizierten Thermoplast als Faserverbundwerkstoff wird gegenüber herkömmlichen Fasermatten oder Polster, beispielsweise aus Wollwatte, bedingt durch die besseren Materialeigenschaften, insbesondere höhere Wärmeformbeständigkeit, des thermisch fixierten Thermoplast eine verbesserte Formbeständigkeit im Herstellungsprozess und damit eine Volumenvergrößerung bei gleichem Materialeinsatz bewirkt.

Bedingt durch die Wärmevorbehandlung und mehrfache Streckung und Verreckung der Fasern kommt es zu einer elektrostatischen Aufladung und infolgedessen zu einer hohen Oberflächenspannung der Fasern, wodurch das hinzugefügte duroplastische Bindemittel besser anhaftet und eine verbesserte Bindung von Thermoplast und Duroplast bewirkt ist.

Darüber hinaus kann als Zusatz dem Fasermaterial und/oder dem duroplastischen Bindemittel ein Flammschutzmittel, insbesondere Exolit oder Aktivkohle, zugefügt sein. Hierdurch ist das Polsterelement 1 schwer entflammbar ausgeführt.

Zusätzlich kann das synthetische Fasermaterial (= Ausgangsmaterial), insbesondere die Fasern, beispielsweise mit einem Hilfs-, Umhüll- und/oder Füllstoff, insbesondere Kreide, Silikate, Zink- oder Kalziumoxid, versehen sein. Mittels des Füllstoffs wird die Oberfläche der Fasern aufgeraut.

Bedingt durch die erfolgte Aufrauhung der Faseroberflächen kann es dann beim Hinzufügen des Bindemittels im Herstellungsprozess zu einer weiteren verbesserten Bindung dieser mit den Fasern kommen.

Zusätzlich können als Fasermaterial leichte Fäden, wie duroplastische oder gummiartige Fäden, hinzugefügt werden.

Ein Polsterelement 1 aus einem solchen schweißbaren Thermoplast ermöglicht, dass dieses bereits im Werkzeug, einem Formgebungswerkzeug, zusätzlich durch eine Hilfskomponente, wie einen heißen Draht, eine gefräste heiße Leiste und/oder durch Ultraschall- oder Vibrationsschweißen, in eine gesonderte Form gebracht wird, insbesondere geschnitten wird, und/oder durch Lösen seitlichen Abfalls und/oder von Abfallen von Löchern in die gesonderte Form gebracht wird.

Ein solches Polsterelement 1 weist ein sehr weiches oder softes Ansitzverhalten und für einen Thermoplast eine gute Wärmeformbeständigkeit mit einem Erweichungspunkt von größer 100°C auf. Zudem ist das Polsterelement 1 besonders leicht.

Bevorzugt ist das Polsterelement 1 vollständig aus dem synthetischen Fasermaterial aus Polyethylenterephthalat (kurz auch PET genannt) gebildet oder nur oberflächenseitig aus einer Lage eines solchen synthetischen Fasermaterials gebildet. Insbesondere kann das Polsterelement 1 aus recyceltem PET gebildet sein.

Alternativ kann das Polsterelement 1 in nicht näher dargestellter Art und Weise als ein Hybrid-Teil ausgebildet sein, wobei ein Kern oder Träger, insbesondere ein Komforteinleger, aus Naturfasern, wie Kokosfasern, oder Kunststoffschaum, wie PUR-Schaum, gebildet ist und an oder mit diesem das schweißbare Thermoplast angeformt, insbesondere angespritzt oder angeschweißt, ist. Mit anderen Worten: Das Polsterelement 1 kann auf zumindest einer der Oberflächenseiten mit einem oder mehreren Einlegern versehen sein, die schichtweise angeformt, insbesondere angespritzt oder angeschweißt sind. Auf der gegenüberliegenden Oberflächenseite kann ein Vlies, insbesondere ein Wollvlies oder PET-Vlies, angeordnet, insbesondere angeschweißt sein.

Gegenüber herkömmlichen Polsterelementen aus Naturfasern, wie Kokosfasern, weist das Polsterelement 1 eine im Wesentlichen glatte Oberfläche und somit geringere Oberflächenrauheit auf. Insbesondere ist ein aus einem schweißbaren Thermoplast mit duroplastischen Bindemittel gebildetes Polsterelement 1 sowohl homogener und gleichmäßiger in seiner Form als auch in seiner Wärmeformbeständigkeit.

Durch entsprechende Vorgabe von Faserlänge, Faserdurchmesser, Faserquerschnittsform, Faserform, d. h. Verdrillung und/oder Windung, und/oder Fasermenge pro Polsterelement 1 kann der Komfort und die Festigkeit des Polsterelements 1 vorgegeben werden. Insbesondere können hierdurch bereichsweise verschiedene Eigenschaften, insbesondere Komfort- oder Sitzeigenschaften bei einem Polsterelement 1 für einen Fahrzeugsitz erzielt werden. Dabei sind verschiedene Bereiche des Polsterelements 1 durch unterschiedliche Fasermengen und/oder Bindemittelmengen und durch unterschiedliche Mengenverhältnissen dieser und/oder durch Fasern mit unterschiedlicher Faserlänge, Faserdurchmesser, Faserquerschnittsform, Faserform und/oder Fasermenge, gebildet. Zusätzlich oder alternativ sind verschiedene Bereiche des Polsterelementes 1 mittels eines vorgebbaren Mengenverhältnisses zwischen Fasern und Bindemittel ausbildbar, wobei die Bereiche in Abhängigkeit des Mengenverhältnisses unterschiedliche Festigkeiten aufweisen.

Die Fasern des Fasermaterials können eine definierte Faserlänge, insbesondere in einem Bereich von 10 cm bis 15 cm, insbesondere von 10 cm, 12 cm und/oder 14 cm, und/oder einen definierten Faserdurchmesser, insbesondere Fasern mit einem Durchmesser in einem Bereich von 0,10 mm bis 0,18 mm, insbesondere von 0,16 mm, 0,14 mm und/oder 0,12 mm, und/oder eine definierte Faserquerschnittsform, insbesondere ein Hohl- oder Vollprofil, rund oder oval, aufweisen.

Ferner kann das Polsterelement 1 eine vorgegebene Faserquantität/-menge aufweisen. Beispielsweise kann das Fasermaterial lagen- oder schichtweise in ein Werkzeug eingebracht werden. Dabei können die Lagen aus verschiedenen Fasern mit verschiedener Faserlänge, Faserdurchmesser, Faserquerschnittsform und/oder Fasermenge gebildet sein, wobei zumindest jeweils eine Lage aus homogenen und weitgehend gleichen Fasern gebildet ist.

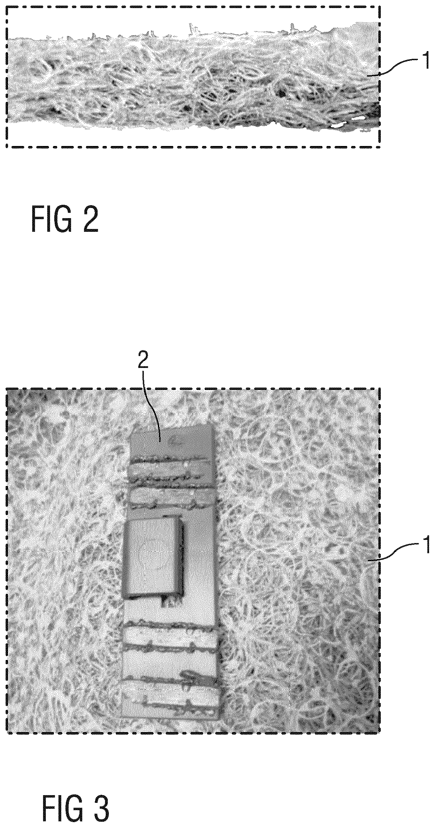

Figur 2 zeigt schematisch ein Ausführungsbeispiel für ein Polsterelement 1 aus einem gebundenen Fasermaterial in Schnittdarstellung. Dabei kann es sich bei dem Fasermaterial um ein insbesondere dreidimensionales stochastisch orientiertes, synthetisches Fasermaterial aus Polyethylenterephthalat handeln. Alternativ kann es sich um recyceltes Fasermaterial handeln, beispielsweise aus zerkleinerten PET-Flaschen. Alternativ kann dieses Polsterelement 1 eine Lage eines größeren Polsterteiles, insbesondere im Bereich einer Oberfläche oder als Inlay des größeren Polsterteiles, bilden.

Bedingt durch die Ausbildung des Polsterelements 1 aus dem gebundenen Fasermaterial (= schweißbarer Thermoplast aus synthetischen Fasern optional umhüllt, gefüllt und/oder versehen mit einem Hilfsstoff) kann das Fasermaterial geschmolzen und umgeformt werden, zum Beispiel können feine oder filigrane Konturen des Polsterelements 1 bei der Umformung 1 erzielt werden. Insbesondere können Nahtgraben, die zur Bezugsabheftung mit Clips-Nuten dienen, und/oder Haken in das Polsterelement 1 eingebracht, insbesondere eingeformt/verschweißt werden.

Figur 3 zeigt schematisch ein Ausführungsbeispiel für ein Polsterelement 1 aus einem gebundenen Fasermaterial mit einer integrierten, insbesondere mit dem Fasermaterial verbundenen, beispielsweise stoffschlüssig angebundenen, beispielsweise angeschweißten Zusatzkomponente 2, zum Beispiel einer Trägerstruktur oder einer Anbindung oder einem Halter oder einem Anbauteil. Durch die erfindungsgemäße Ausgestaltung des Polsterelements 1 als ein schweißbarer Thermoplast können als Zusatzkomponente 2, insbesondere Kunststoff- oder Metallteile, wie Sitzanbauteile, ein Clip zur Befestigung von Bezügen oder Auflagen und/oder Klettbänder für Bezüge in konkaven Flächen des Polsterelements 1, Klimaschläuche, Abstandsgewirke, Massagematten, Auflagen, Lordosematten/-elemente, direkt stoffschlüssig angeformt oder angebunden werden, beispielsweise durch Heißnieten und/oder Heißstempeln, Schweißen, Löten etc.

Hierdurch entfällt das übliche Verschrauben oder Einhängen oder Verclipsen. Somit ist oder sind die Zusatzkomponente 2 bzw. die Zusatzkomponenten 2 in das Polsterelement 1 integriert. Dabei kann oder können die Zusatzkomponente/n 2 während der Herstellung des Polsterelements 1 oder nachträglich an dieses befestigt werden.

Des Weiteren können in das Fasermaterial des Polsterelements 1 bereichsweise Zusatzmittel, insbesondere ein Anteil leitender Drähte, die als Sitzheizung und/oder Stromführung dienen, und/oder andere, insbesondere leuchtende Kunststofffasern beim Herstellen des Polsterelements 1 beigefügt werden. Dabei können diese Zusatzmittel zusätzlich oder alternativ zur bereichsweisen Einbringung lage- und/oder schichtweise in das Fasermaterial bei der Herstellung des Polsterelements 1 beigefügt werden. Insbesondere kann das eingebrachte Zusatzmittel eine Beschichtung, insbesondere eine metallische Beschichtung, und/oder einen Kern oder einen Komforteinleger 3 des Polsterelements 1 bilden.

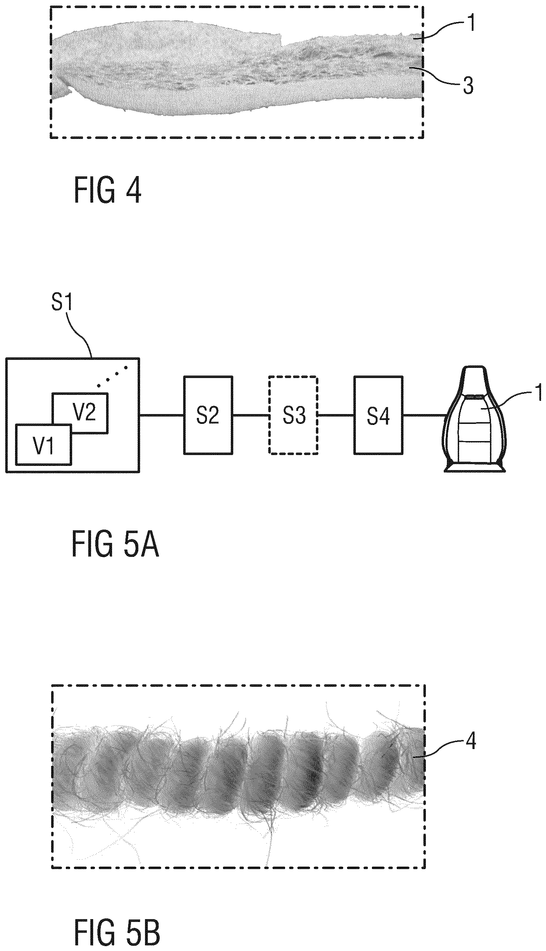

Figur 4 zeigt schematisch ein Ausführungsbeispiel für ein Polsterelement 1 aus einem gebundenen Fasermaterial mit einem solchen Komforteinleger 3, insbesondere einem Einleger aus einem anderen Material mit anderen vorgegebenen Eigenschaften, insbesondere aus einem Naturfasermaterial, wie Kokosfasern, und/oder aus einem metallischen Material und/oder einem anderen Kunststoffmaterial, beispielsweise aus einem Schaum, wie PUR-Schaum.

Wie oben bereits beschrieben, kann bei der Herstellung des Polsterelements 1 zunächst Endlosrohfasermaterial wärmevorbehandelt und optional durch Zugabe eines Zusatzstoffes, wie eines Füllstoffes und/oder eines Flammenschutzmittels, behandelt werden, um gezielt eine Faseroberfläche zu beeinflussen, beispielsweise eine höhere Oberflächenspannung oder ein Aufrauen der Faseroberfläche und/oder eine Fasereigenschaft, wie schwere Entflammbarkeit, zu ermöglichen.

Erfindungsgemäß wird das Fasermaterial wärmevorbehandelt.

Figur 5A zeigt einen Ablauf eines Verfahrens zur Herstellung des Polsterelements 1.

Dabei wird das dreidimensionale stochastisch orientierte Fasermaterial in einem ersten Verfahrensschritt S1 aus einem Granulat aus Polyethylenterephthalat, insbesondere recycelten Polyethylenterephthalat, wie Granulat aus PET-Flaschen, gebildet und mehrfach wärmevorbehandelt, gestreckt, verreckt und heiß getrocknet. Hierzu sind entsprechend herkömmliche Wärmeöfen und Streck-, Verreck- sowie Verdrillmaschinen in einem Prozessablauf vorgesehen und entsprechend angeordnet.

Bevorzugt wird das Fasermaterial zumindest zweimal wärmevorbehandelt, wobei Fasern erzeugt, erwärmt gestreckt und verreckt und anschließend heiß getrocknet werden.

Beispielsweise wird das Fasermaterial stufenweise in Temperaturbereichen von 90°C bis 250°C wärmevorbehandelt und in Temperaturbereichen von 80°C bis 130°C heiß getrocknet. Beispielsweise wird das Fasermaterial in einer ersten Vorbehandlung V1 bei einer Temperatur von größer 200°C, insbesondere von 200°C bis 250°C, beispielsweise von 220°C, erwärmt und anschließend gestreckt und verreckt und bei einer Temperatur von kleiner 150°C, insbesondere bei einer Temperatur von 100°C, heiß getrocknet.

In einer zweiten Vorbehandlung V2 wird das Fasermaterial bei einer Temperatur von größer 150°C, insbesondere von 150°C bis 200°C, beispielsweise von 160°C oder 180°C, erwärmt und anschließend gestreckt und verreckt und bei einer Temperatur von kleiner 150°C, insbesondere bei einer Temperatur von 100°C, heiß getrocknet.

Die einmal oder mehrmals wärmevorbehandelten Fasern, insbesondere Endlosfasern, werden anschließend einem zweiten Verfahrensschritt S2 in eine vorgegebene Länge, beispielsweise von 90 cm bis 150 cm, insbesondere von 120 cm, geschnitten, wobei geschnittene Fasern oder Endlosfaser zu einem Faserstrang getwistet werden. Dabei können zunächst die Fasern geschnitten und dann zu Kurzfasersträngen getwistet werden. Alternativ können Endlosfasern zu einem Endlosfaserstrang getwistet und dieses dann in Kurzfaserstränge geschnitten werden.

Optional kann in einem dritten Verfahrensschritt S3 der Faserstrang - Kurzfaserstrang aus geschnittenen Fasern oder Endlosfasern - wärmevorbehandelt werden. Hierdurch kommt es zu einer stärkeren Kräuselung der Fasern des Faserstrangs. Dabei wird oder werden der getwistete Faserstrang bzw. die Faserstränge in einem Temperaturbereich von 100°C bis 130°C, insbesondere bei 120°C, für mehrere Minuten, insbesondere mehr als 20 Minuten, beispielsweise 22 Minuten oder 25 Minuten, wärmebehandelt.

In einem vierten Verfahrensschritt S4 werden aus dem Faserstrang oder den Fasersträngen Fasern gelöst und mit dem duroplastischen Bindemittel 5 gemischt und in ein Formgebungswerkzeug gegeben und dort unter Wärme gebunden und zu dem Polsterelement 1 geformt. Dabei werden die gelösten und mit dem duroplastischen Bindemittel 5 gemischten Fasern bei einer Temperatur von größer 100°C, insbesondere in einem Bereich von 110°C bis 120°C, im geschlossenen Formgebungswerkzeug gebunden und geformt. Die Verweildauer im Formgebungswerkzeug beträgt wenige Minuten, insbesondere mehr als zwei Minuten, insbesondere zwei bis acht Minuten, beispielsweise vier oder sechs Minuten. Dabei wird dem duroplastischen Bindemittel 5 Wasser entzogen.

Im zweiten Verfahrensschritt S2 oder vierten Verfahrensschritt S4 können die Fasern zusätzlich mit einem Füllstoff, insbesondere Kreide oder Zinkoxid, und/oder einem Flammenschutzmittel versehen werden. Die Zugabe des Füllstoffs und/oder des Flammenschutzmittels wirkt eigenschaftsverändernd, insbesondere werden solche Füllstoffe zugefügt, welche den Erweichungsgrad des Fasermaterials erhöhen, insbesondere bei einem Thermoplast von 75°C auf ca. 100°C und mehr erhöhen, oder die Entflammbarkeit reduzieren, so dass der Thermoplast schwer entflammbar ist. Alternativ zum Hinzugeben eines Füllstoffs zum Aufrauen der Oberfläche des Endlosfasermaterials kann dieses, insbesondere deren Oberfläche angeätzt oder mit einem Haftvermittler versehen werden.

Der Füllstoff und/oder das Flammschutzmittel kann einer Spritzgussmaschine, insbesondere im Bereich der Spritzdüse, beim Abformen der Endlosrohfasern im zweiten Verfahrensschritt S2 zugegeben werden.

Bevorzugt erfolgt das Einbringen des Füllstoffs und/oder des Flammenschutzmittels vor dem Formgebungswerkzeug. Alternativ kann dieser Hilfs-, Umhüll- und/oder Füllstoff, insbesondere Kreide oder Zinkoxid, in die Schmelze der Fäden im Werkzeug hinzugegeben werden.

Im zweiten Verfahrensschritt S2 können die Endlosrohfasern oder geschnittene Fasern beispielsweise mit einer Länge von 100 bis 150 mm zur Volumenvergrößerung gedrillt/getwistet werden. Dabei kann die Anzahl der Verdrillvorgänge für die Fäden abhängig von der gewünschten Festigkeit und/oder dem zu erzielenden Volumen vorgegeben werden. Durch die Verdrillung der Fäden unter Hinzufügung von Wärme werden diese fixiert, so dass daraus gebildete Fasern mit größerem Volumen beim Formgeben des Endprodukts (=Polsterelement 1) zu einer verbesserten Konturenausbildung bei weniger Materialeinsatz führen.

Durch die Verwendung der durch mehrfache Wärmevorbehandlung thermisch fixierten und gegebenenfalls verdrillten Fäden/Fasern mit einer aus dieser Vorbehandlung resultierenden verbesserten, insbesondere höheren Formbeständigkeit/Festigkeit und einem größeren Volumen steigt infolgedessen beim Formprozess im Formgebungswerkzeug ein Innendruck in dem Formgebungswerkzeug, wobei der Innendruck konturgebend ist. Zu einer Seite drückt eine somit gebildete Masse gegen andere Fasern, beispielsweise ein Vlies, wie eine Wollwatte oder ein PET-Vlies, zur Ausformung und zur anderen Seite gegen einen Werkzeugdeckel des Formgebungswerkzeugs, um verhältnismäßig scharf abgegrenzte Konturen auszuformen. Dabei gilt: Je höher der Innendruck infolge der Verwendung des modifizierten, insbesondere thermisch fixierten Thermoplasts desto bessere Konturschärfe wird beim zu formenden Polsterelement erzielt.

Je nach Vorgabe, beispielsweise zur Gewichtsreduzierung und/oder Größenreduzierung, kann die Anzahl an Fäden im Thermoplast und daraus resultierend die Wärmeformbeständigkeit/-festigkeit des Thermoplast zur Herstellung des Polsterelements 1 reduziert werden und demzufolge das Gewicht und/oder die Größe, insbesondere die Abmessungen, und/oder die Konturen, insbesondere die Schärfe der Konturen, des Polsterelements 1 reduziert werden.

Beim Formgeben des Endprodukts wird dann der gedrillte Endlosfaserstrang wieder geöffnet, das heißt, es werden Fasern/Fäden gelöst. Zusätzlich kann vorgesehen sein, dass der geöffnete Endlosfaserstrang anschließend zugeschnitten wird. Dabei können die dem Formgebungswerkzeug zugeführten gedrillten und/oder geöffneten und/oder geschnittenen Endlosfäden gleiche und/oder unterschiedliche Eigenschaften aufweisen. Insbesondere können sich die Endlosfäden in Material, Form, Länge, Querschnitt, Durchmesser und Art und Anzahl der Twist-/ Verdrillvorgänge, insbesondere Thermo-Twisten/-Verdrillen unterscheiden.

Die Fäden, ob ohne oder mit Hilfsstoff, beispielsweise werden dann in das Formgebungswerkzeug oder über den Zwischenschritt des Twistens/Entwistens eingegeben. Dabei können die Fäden 6 lagen- oder schichtweise und/oder bereichsweise in das Formgebungswerkzeug, gegebenenfalls unter Hinzugabe der Hilfsstoffe, insbesondere einem Flammenhämmer, hinzugegeben werden. Zusätzlich kann dann das Bindemittel 5 eingetragen werden.

Bedingt durch das im Wesentlichen wollfreie geschmolzene Fasermaterial im Werkzeug kann das Polsterelement 1 noch im Werkzeug mittels Heißschneiden/Ultraschall-Schneiden zugeschnitten werden. Nach Entnahme des fertigen Polsterelements 1 aus dem Werkzeug und Abkühlung durch Heißtrocknung können dann Zusatzkomponenten 2 an das Polsterelement 1 stoffschlüssig angeformt, insbesondere angeschweißt werden. Beispielsweise können Clipse direkt in das Werkzeug eingebracht und nach einem Trockenprozess angeschweißt werden.

Ein an dem Werkzeug ausgebildeter Füllkragen dient dazu, dass vergleichsweise sehr feine und/oder dünne Fasern nicht aus dem Werkzeug herausfliegen können.

Durch die Verdrillung der Fäden optional unter Hinzufügung von Wärme werden diese fixiert und somit modifiziert, so dass im Herstellungsprozess bei gleichem Materialeinsatz, wie bei herkömmlichen Verfahren, aufgrund der höheren Wärmeformbeständigkeit/Festigkeit und der Volumenvergrößerung ein höherer Innendruck herrscht, welcher zur Herstellung der Konturschärfe mit einer verbesserten Konturenausbildung sowie zur Herstellung einer Gleichmäßigkeit des Faserverbundes beiträgt.

Figur 5B zeigt schematisch einen verdrillten Faserstrang 4, aus dem einzelne Fasern (ohne Bezugszeichen) abstehen. Diese Kräuselung der Fasern entsteht beispielsweise durch die Wärmebehandlung des verdrillten Faserstrangs 4.

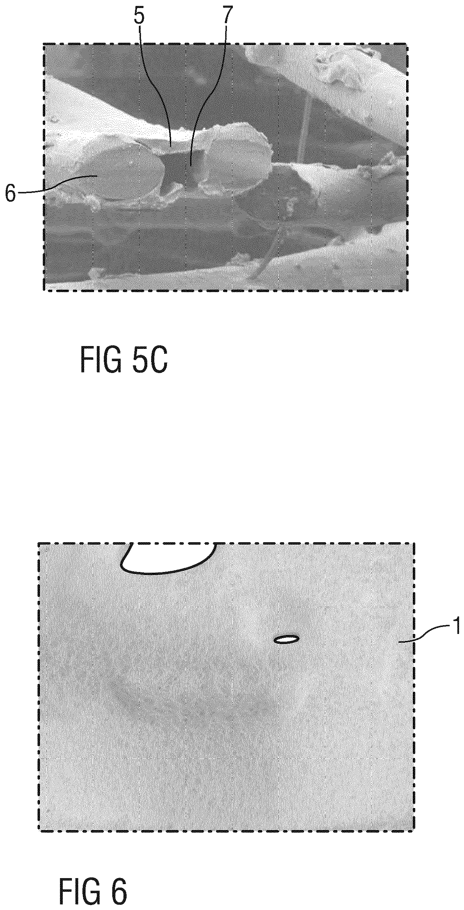

Figur 5C zeigt beispielhaft einen Zwischenzustand des Fasermaterials, wobei die wärmevorbehandelten Fasern 6 mit einem duroplastischen Bindemittel 5 versehen sind. Aufgrund der Vorbehandlung der Fasern 6 durch Wärme, Streckung, Verreckung, Verdrillung weisen diese eine homogene Oberfläche auf. Infolge der Vorbehandlung und der homogenen Oberfläche kommt es zu einer elektrostatischen Aufladung und höheren Oberflächenspannungen, so dass das duroplatische Bindemittel 5 an den Fasern 6 besser anhaftet. Wie zu sehen, kommt es nicht nur zu einer Umhüllung der Fasern 6 mit dem Bindemittel 5, sondern sogar zu einem übergreifenden Anhaften des Bindemittels 5 unter Bildung von Hohlräumen 7 zwischen den Fasern 6.

Figur 6 zeigt schematisch einen vergrößerten Ausschnitt einer Oberfläche eines Polsterelements 1. Gegenüber herkömmlichen Polsterelementen weist das erfindungsgemäße Polsterelement 1 aufgrund der Verwendung eines Thermoplast mit verbesserten Bindungseigenschaften und optional aufgerauter Faseroberfläche in Kombination mit dem duroplastischen Bindemittel eine höhere Konturenschärfe auf.

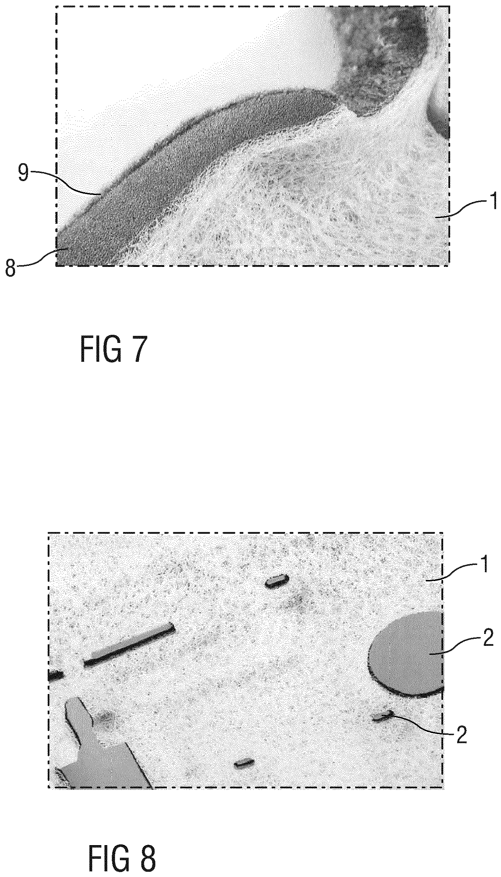

Figur 7 zeigt schematisch einen vergrößerten Ausschnitt eines Querschnitts durch einen Sitz, gebildet aus dem oben beschriebenen aus Polyethylenterephthalat gebildeten Polsterelement 1, einem Einleger 8 und einem Vlies 9, insbesondere einem non-woven Wollvlies, wie Wollwatte, mit oder ohne PET-Fasern oder einem 100%-igen PET-Vlies. Der Einleger 8 ist beispielsweise PUR-Schaum.

Figur 8 zeigt schematisch einen vergrößerten Ausschnitt einer Draufsicht auf ein als Träger ausgebildetes Polsterelement 1 mit eingebetteten und fest mit diesem verbundenen Zusatzkomponenten 2.

### Bezugszeichenliste

- 1: Polsterelement
- 2: Zusatzkomponente
- 3: Komforteinleger
- 4: Faserstrang
- 5: duroplastisches Bindemittel
- 6: Faser
- 7: Hohlraum
- 8: Einleger
- 9: Vlies

- S1...S4: Verfahrensschritte
- V1: erste Vorbehandlung
- V2: zweite Vorbehandlung

## Patentansprüche

1. Polsterelement (1), welches aus einem Faserverbundwerkstoff mit einem dreidimensional stochastisch orientierten Fasermaterial gebildet ist,
**dadurch gekennzeichnet, dass** der Faserverbundwerkstoff zumindest einen Thermoplast umfasst, der aus einem dreidimensionalen stochastisch orientierten, wärmevorbehandelten Fasermaterial aus Polyethylenterephthalat oder Polysulfon oder einem synthetischen Polymer gebildet ist, und durch Hinzufügen eines Halogenkohlenwasserstoffs oder eines Polyurethane basierten duroplastischen Bindemittels (5) gebunden ist.

2. Polsterelement (1) nach Anspruch 1,
**dadurch gekennzeichnet, dass** das Fasermaterial mittels eines duroplastischen Bindemittels (5) gebunden ist.

3. Polsterelement (1) nach Anspruch 1 oder 2,
**dadurch gekennzeichnet, dass** das Fasermaterial mit einem Hilfs-, Umhüll- und/oder Füllstoff versehen ist.

4. Polsterelement (1) nach einem der vorhergehenden Ansprüche,
**dadurch gekennzeichnet, dass** der Faserverbundwerkstoff gebildet aus dem dreidimensionalen stochastisch orientierten Fasermaterial aus mittels eines duroplastischen Bindemittels (5) gebundenen Polyethylenterephthalat einen Erweichungspunkt von größer 100°C aufweist.

5. Polsterelement (1) nach einem der vorhergehenden Ansprüche,
**dadurch gekennzeichnet, dass** eine Faserlänge, ein Faserdurchmesser, eine Faserquerschnittsform, eine Faserform und/oder eine Fasermenge des Polsterelements (1) vorgegeben ist.

6. Polsterelement (1) nach einem der vorhergehenden Ansprüche,
**dadurch gekennzeichnet, dass** ein Kunststoffteil und/oder ein Metallteil als Zusatzkomponenten (2) oder Zusatzkomponente (2) zur Befestigung an dem Polsterelement (1) und/oder ein Vlies (9) zumindest mit dem Thermoplast des Fasermaterials stoffschlüssig verbunden sind bzw. ist.

7. Polsterelement (1) nach einem der vorhergehenden Ansprüche,
**dadurch gekennzeichnet, dass** in das Fasermaterial zumindest bereichsweise temperierbare und/oder stromführende Elemente, insbesondere Drähte, eingebracht sind.

8. Sitz, insbesondere Fahrzeugsitz, mit zumindest einem Polsterelement (1) nach einem der vorhergehenden Ansprüche.

9. Sitz nach Anspruch 8, **dadurch gekennzeichnet, dass** das Polsterelement (1) in einem einem Benutzer zugewandten Bereich angeordnet ist, wobei das Polsterelement (1) in einem Oberflächenbereich eines Sitz-, Lehnen- und/oder Kopfstützenteils angeordnet ist.

10. Sitz nach Anspruch 8 oder 9,
**dadurch gekennzeichnet, dass** das Polsterelement (1) als Träger oder Polster ausgebildet ist und auf zumindest einer Oberflächenseite mit einem Vlies (9) versehen ist.

11. Sitz nach Anspruch 10,
**dadurch gekennzeichnet, dass** zwischen dem Polsterelement (1) und dem Vlies (9) zumindest ein Einleger (8) angeordnet ist.

12. Verfahren zur Herstellung eines Polsterelementes (1) nach einem der Ansprüche 1 bis 7,
**dadurch gekennzeichnet, dass** als ein Thermoplast ein dreidimensionales stochastisch orientiertes Fasermaterial aus Polyethylenterephthalat oder Polysulfon oder einem synthetischen Polymer zur Bildung eines Faserverbundwerkstoffs wärmevorbehandelt wird und durch Hinzufügen eines Halogenkohlenwasserstoffs oder eines Polyurethane basierten duroplastischen Bindemittels (5) gebunden wird.

13. Verfahren nach Anspruch 12,
**dadurch gekennzeichnet, dass** das Fasermaterial aus einem Granulat aus Polyethylenterephthalat gebildet und derart wärmevorbehandelt wird, dass das Fasermaterial mehr als einmal erwärmt, zu Fasern (6) gestreckt, verreckt und getrocknet wird.

14. Verfahren nach Anspruch 13,
**dadurch gekennzeichnet, dass** die einmal oder mehrmals wärmevorbehandelten Fasern (6) in eine vorgegebene Länge geschnitten und geschnittene Fasern (6) oder Endlosfasern zu einem Faserstrang (4) getwistet werden und optional der Faserstrang (4) wärmevorbehandelt wird.

15. Verfahren nach Anspruch 14,
**dadurch gekennzeichnet, dass** aus dem Faserstrang (4) Fasern (6) gelöst werden und mit dem duroplastischen Bindemittel (5) gemischt und in einem Formgebungswerkzeug erwärmt und gebunden werden.

## Claims

1. Upholstery element (1) which is formed from a fibre-composite material having a fibrous material that is oriented in a three-dimensionally stochastic manner,
**characterized in that** the fibre-composite material comprises at least one thermoplastics which is formed from a thermally pre-treated three-dimensional fibrous material that is oriented in a stochastic manner from polyethylene terephthalate or polysulfone or a synthetic polymer, and is bonded by adding a halogenated hydrocarbon or a polyurethane-based thermosetting bonding agent (5).

2. Upholstery element (1) according to Claim 1, **characterized in that** the fibrous material is bonded by means of a thermosetting bonding agent (5) .

3. Upholstery element (1) according to Claim 1 or 2, **characterized in that** the fibrous material is provided with an auxiliary, casing and/or filling material.

4. Upholstery element (1) according to one of the preceding claims,
**characterized in that** the fibre-composite material formed from the three-dimensional fibrous material that is oriented in a stochastic manner, from polyethylene terephthalate bonded by means of a thermosetting bonding agent (5), has a softening point of more than 100°C.

5. Upholstery element (1) according to one of the preceding claims,
**characterized in that** a fibre length, a fibre diameter, a fibre cross-sectional shape, a fibre shape, and/or a fibre quantity of the upholstery element (1) are/is predefined.

6. Upholstery element (1) according to one of the preceding claims,
**characterized in that** a plastics material part and/or a metal part as additional components (2) or an additional component (2) for fastening to the upholstery element (1) and/or a non-woven (9) are/is connected by a material bond to at least the thermoplastics of the fibrous material.

7. Upholstery element (1) according to one of the preceding claims,
**characterized in that** temperature-controllable and/or current-conducting elements, in particular wires, are incorporated at least in regions in the fibrous material.

8. Seat, in particular a vehicle seat, having at least one upholstery element (1) according to one of the preceding claims.

9. Seat according to Claim 8,
**characterized in that** the upholstery element (1) is disposed in a region facing a user, wherein the upholstery element (1) is disposed in a surface region of a seat part, backrest part, and/or headrest part.

10. Seat according to Claim 8 or 9,
**characterized in that** the upholstery element (1) is configured as a support or cushion and at least on one surface side is provided with a non-woven (9).

11. Seat according to Claim 10,
**characterized in that** at least one insert (8) is disposed between the upholstery element (1) and the non-woven (9).

12. Method for producing an upholstery element (1) according to one of Claims 1 to 7,
**characterized in that**, for forming a fibre-composite material, as a thermoplastic a three-dimensional fibrous material that is oriented in a stochastic manner from polyethylene terephthalate or polysulfone or a synthetic polymer is thermally pre-treated and is bonded by adding a halogenated hydrocarbon or a polyurethane-based thermosetting bonding agent (5).

13. Method according to Claim 12,
**characterized in that** the fibrous material is formed from a granulate from polyethylene terephthalate and is thermally pre-treated in such a manner that the fibrous material is heated more than once, drafted so as to form fibres (6), oriented, and dried.

14. Method according to Claim 13,
**characterized in that** the fibres (6) that have been thermally pre-treated once or multiple times are cut to a predefined length, and cut fibres (6) or continuous fibres are twisted so as to form a fibre strand (4), and the fibre strand (4) is optionally thermally pre-treated.

15. Method according to Claim 14,
**characterized in that** fibres (6) are released from the fibre strand (4) and mixed with the thermosetting bonding agent (5), and are heated and bonded in a shape-imparting tool.

## Revendications

1. Elément de rembourrage (1), qui est formé en un matériau composite de fibres avec un matériau fibreux à orientation tridimensionnellement aléatoire,
**caractérisé en ce que** le matériau composite de fibres comprend au moins un thermoplastique, qui est formé en un matériau fibreux prétraité à chaud à orientation aléatoire tridimensionnelle en téréphtalate de polyéthylène ou en polysulfone ou en un polymère synthétique et qui est lié par incorporation d'un hydrocarbure halogéné ou d'un liant thermodurcissable (5) à base de polyuréthane.

2. Elément de rembourrage (1) selon la revendication 1, **caractérisé en ce que** le matériau fibreux est lié au moyen d'un liant thermodurcissable (5).

3. Elément de rembourrage (1) selon une revendication 1 ou 2, **caractérisé en ce que** le matériau fibreux est muni d'une matière auxiliaire, d'enrobage et/ou de remplissage.

4. Elément de rembourrage (1) selon l'une quelconque des revendications précédentes, **caractérisé en ce que** le matériau composite de fibres formé avec le matériau fibreux à orientation aléatoire tridimensionnelle en téréphtalate de polyéthylène lié au moyen d'un liant thermodurcissable (5) présente un point de ramollissement de plus de 100°C.

5. Elément de rembourrage (1) selon l'une quelconque des revendications précédentes, **caractérisé en ce qu'**une longueur de fibre, un diamètre de fibre, une forme de section transversale de fibre, une forme de fibre et/ou une quantité de fibres de l'élément de rembourrage (1) est prédéterminé(e).

6. Elément de rembourrage (1) selon l'une quelconque des revendications précédentes, **caractérisé en ce qu'**une partie en matière plastique et/ou une partie en métal en tant que composants complémentaires (2) ou composant complémentaire (2) pour la fixation à l'élément de rembourrage (1) et/ou un non tissé (9) sont/est assemblé(s) matériellement au moins au thermoplastique du matériau fibreux.

7. Elément de rembourrage (1) selon l'une quelconque des revendications précédentes, **caractérisé en ce que** des éléments conducteurs du courant et pouvant être chauffés au moins localement, en particulier des fils, sont introduits dans le matériau fibreux.

8. Siège, en particulier siège de véhicule, comportant au moins un élément de rembourrage (1) selon l'une quelconque des revendications précédentes.

9. Siège selon la revendication 8, **caractérisé en ce que** l'élément de rembourrage (1) est disposé dans une région tournée vers un utilisateur, dans lequel l'élément de rembourrage (1) est disposé dans une région de surface d'une partie de siège, de dossier et/ou d'appuie-tête.

10. Siège selon une revendication 8 ou 9, **caractérisé en ce que** l'élément de rembourrage (1) est réalisé sous forme de support ou de coussin, et est pourvu d'un non tissé (9) sur au moins un côté de la surface.

11. Siège selon la revendication 10, **caractérisé en ce qu'**au moins une pièce intermédiaire (8) est disposée entre l'élément de rembourrage (1) et le non tissé (9).

12. Procédé de fabrication d'un élément de rembourrage (1) selon l'une quelconque des revendications 1 à 7,
**caractérisé en ce que** l'on prétraite à chaud en tant que thermoplastique un matériau fibreux à orientation aléatoire tridimensionnelle en téréphtalate de polyéthylène ou en polysulfone ou en un polymère synthétique pour la formation d'un matériau composite de fibres et on le lie par incorporation d'un hydrocarbure halogéné ou d'un liant thermodurcissable à base de polyuréthane (5).

13. Procédé selon la revendication 12, **caractérisé en ce que** le matériau fibreux est formé à partir d'un granulat en téréphtalate de polyéthylène et il est prétraité à chaud, de telle manière que le matériau fibreux soit chauffé plus d'une fois, et soit étendu en fibres (6), étiré et séché.

14. Procédé selon la revendication 13, **caractérisé en ce que** les fibres (6) prétraitées à chaud une fois ou plusieurs fois sont coupées à une longueur prédéterminée et des fibres coupées (6) ou des fibres sans fin sont torsadées en un cordon de fibres (4) et en option le cordon de fibres (4) est prétraité à chaud.

15. Procédé selon la revendication 14, **caractérisé en ce que** l'on détache des fibres (6) du cordon de fibres (4) et on les mélange avec le liant thermodurcissable (5) et on les chauffe et on les lie dans un outil de formage.
